(19) Europäisches Patentamt
European Patent Office
Office européen des brevets

(11) Veröffentlichungsnummer: **0 275 012 B1**

(12) **EUROPÄISCHE PATENTSCHRIFT**

(45) Veröffentlichungstag der Patentschrift: **29.01.92**

(51) Int. Cl.5: **A01N 47/04**, //(A01N47/04, 43:653)

(21) Anmeldenummer: **88100032.7**

(22) Anmeldetag: **05.01.88**

Die Akte enthält technische Angaben, die nach dem Eingang der Anmeldung eingereicht wurden und die nicht in dieser Patentschrift enthalten sind.

# (54) Fungizide Wirkstoffkombinationen.

(30) Priorität: **15.01.87 DE 3700922**

(43) Veröffentlichungstag der Anmeldung: **20.07.88 Patentblatt 88/29**

(45) Bekanntmachung des Hinweises auf die Patenterteilung: **29.01.92 Patentblatt 92/05**

(84) Benannte Vertragsstaaten: **AT BE CH DE FR IT LI NL**

(56) Entgegenhaltungen:
**EP-A- 0 096 307**
**EP-A- 0 135 854**
**EP-A- 0 135 855**
**EP-A- 0 166 462**
**DE-A- 2 552 967**
**DE-A- 3 242 646**

(73) Patentinhaber: **BAYER AG**
**W-5090 Leverkusen 1 Bayerwerk(DE)**

(72) Erfinder: **Brandes, Wilhelm, Dr.**
**Eichendorffstrasse 3**
**W-5653 Leichlingen(DE)**
Erfinder: **Kaspers, Helmut, Dr.**
**Steglitzer Strasse 4**
**W-5090 Leverkusen 1(DE)**
Erfinder: **Scheinpflug, Hans, Prof. Dr.**
**Am Thelenhof 15**
**W-5090 Leverkusen 1(DE)**
Erfinder: **Holmwood, Graham, Dr.**
**Krutscheider Weg 105**
**W-5600 Wuppertal 11(DE)**

EP 0 275 012 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Anmeldung betrifft neue Wirkstoffkombinationen, die aus dem bekannten 3,3-Dimethyl-2-(4-methoximinomethylphenoxymethyl)-1-(1,2,4-triazol-1-yl)-butan-2-ol einerseits und dem ebenfalls bekannten N,N-Dimethyl-N'-(fluordichlormethylmercapto)-N'-(4-methyl-phenyl)-sulfamid andererseits bestehen, und sehr gut zur Bekämpfung von Pilzen geeignet sind.

Es ist bereits bekannt geworden, daß 3,3-Dimethyl-2-(4-methoximinomethyl-phenoxymethyl)-1-(1,2,4-triazol-1-yl)-butan-2-ol fungizide Potenz besitzt (vgl. EP-OS 0 110 048). Die Wirksamkeit dieses Stoffes ist gut; sie läßt jedoch bei niedrigen Aufwandmengen in manchen Fällen zu wünschen übrig.

Ferner ist schon bekannt, daß N,N-Dimethyl-N'-(fluordichlormethylmercapto)-N'-(4-methyl-phenyl)-sulfamid zur Bekämpfung von Pilzen eingesetzt werden kann (vgl. K.H. Büchel "Pflanzenschutz und Schädlingsbekämpfung", Seite 141, Georg Thieme Verlag, Stuttgart, 1977). Die Wirkung dieses Stoffes ist aber bei niedrigen Aufwandmengen ebenfalls nicht immer befriedigend.

Es wurde nun gefunden, daß die neuen Wirkstoffkombinationen aus

a) 3,3-Dimethyl-2-(4-methoximinomethyl-phenoxymethyl)-1-(1,2,4-triazol-1-yl)-butan-2-ol der Formel

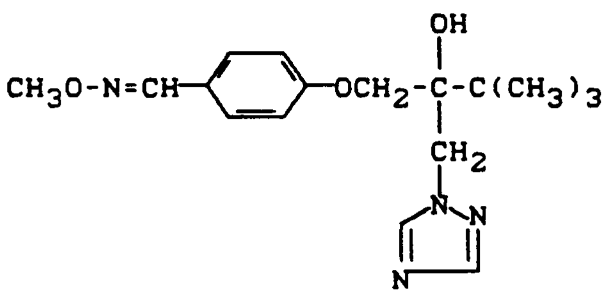

(I)

und

b) N,N-Dimethyl-N'-(fluordichlormethylmercapto)-N'-(4-methyl-phenyl)-sulfamid der Formel

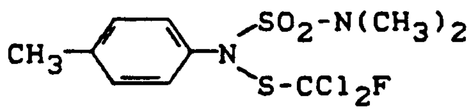

(II)

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer echter synergistischer Effekt vor und nicht nur eine Wirkungsergänzung.

Die in den erfindungsgemäßen Wirkstoffkombinationen enthaltenen Wirkstoffe sind bereits bekannt (vgl. EP-OS 0 110 048 und K.H. Büchel "Pflanzenschutz und Schädlingsbekämpfung" Seite 141, Georg Thieme Verlag, Stuttgart 1977).

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I) 0,1 bis 100 Gewichtsteile, vorzugsweise 1 bis 10 Gew.-Teile an Wirkstoff der Formel (II).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Botrytis-Arten im Weinbau, bei Beerenobst und im Gemüsebau, ferner zur Bekämpfung von Monilia-Arten im Steinobstbau sowie zur Bekämpfung von Sclerotinia-Arten an verschiedenen Kulturen, wie zum Beispiel Raps.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz-

und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide Wirkung der erfindungsgemäßen Wirkstoffkombinationen geht aus dem nachfolgenden Beispiel hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzelnen applizierten Wirkstoffe.

Die zu erwartende Wirkung für eine gegebenene Kombination zweier Wirkstoffe kann (vgl. Colby, S.R., "Calculating synergistic and antogonistic responses of herbicide combinations", Weeds 15, Seiten 20-22,

1967) wie folgt berechnet werden:

Wenn

X den Krankheitsbefall, ausgedrückt in % der unbehandelten Kontrolle, beim Einsatz des Wirkstoffes A in einer Konzentration von m ppm,

Y den Krankheitsbefall, ausgedrückt in % der unbehandelten Kontrolle, beim Einsatz des Wirkstoffes B in einer Konzentration von n ppm und

E den erwarteten Krankheitsbefall, ausgedrückt in % der unbehandelten Kontrolle, beim Einsatz der Wirkstoffe A und B in Konzentrationen von m und n ppm bedeutet,

dann ist

$$E = \frac{X \cdot Y}{100}$$

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Befall geringer sein als der aus der oben angeführten Formel errechnete Wert für den erwarteten Befall (E).

Aus der Tabelle des folgenden Beispiels geht eindeutig hervor, daß die gefundene Wirkung der erfindungsgemäßen Wirkstoffkombinationen größer ist als die berechnete, d.h., daß ein synergistischer Effekt vorliegt.

Beispiel A

Botrytis-Test (Bohne) / protektiv

Zur Herstellung einer zweckmäßigen Wirkstoffzubereitung wird jeweils eine spritzfähige, handelsübliche Wirkstoff-Formulierung mit Wasser auf die jeweils gewünschte Konzentration verdünnt.

Zur Prüfung auf protektive Wirksamkeit bespritzt man junge Pflanzen mit der jeweiligen Wirkstoffzubereitung (einzelne Wirkstoffe oder Wirkstoffkombinationen) bis zur Tropfnässe. Nach Antrocknen des Spritzbelages werden auf jedes Blatt 2 kleine mit Botrytis cinerea bewachsene Agarstückchen aufgelegt. Die inokulierten Pflanzen werden in einer abgedunkelten, feuchten Kammer bei 20° C aufgestellt. 3 Tage nach der Inokulation wird die Größe der Befallsflecken auf den Blättern ausgewertet.

Wirkstoffe, Wirkstoffkonzentrationen und Versuchsergebnisse gehen aus der folgenden Tabelle hervor.

Tabelle A:

Botrytis-Test (Bohne) / protektiv

| Wirkstoffe | Wirkstoffkonzentration in der Spritzbrühe in ppm | Krankheitsbefall in % der unbehandelten Kontrolle |
|---|---|---|
| - (Kontrolle) | - | = 100 |
| (I) | 6,25 | 54 |
| (II) | 12,5 | 22 |
| | | gefunden berechnet*) |
| (I) + (II) | 6,25 12,5 | 1 12 |

*) Berechnet nach der auf der Seite 8 angegebenen Formel.

## Patentansprüche

**1.** Fungizide Mittel, gekennzeichnet durch einen Gehalt an einer Wirkstoffkombination bestehend aus

a) 3,3-Dimethyl-2-(4-methoximinomethyl-phenoxymethyl)-1-(1,2,4-triazol-1-yl)-butan-2-ol der Formel

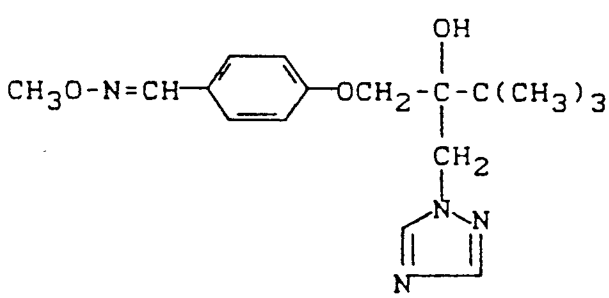

(I)

und

b) N,N-Dimethyl-N'-(fluordichlormethylmercapto)-N'-(4-methyl-phenyl)-sulfamid der Formel

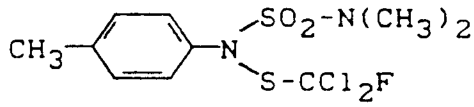

(II),

wobei in der Wirkstoffkombination das Gewichtsverhältnis von Wirkstoff der Formel (I) zu Wirkstoff der Formel (II) zwischen 1 : 1 und 1 : 10 liegt.

2. Verfahren zur Bekämpfung von Pilzen, dadurch gekennzeichnet, daß man Wirkstoffkombinationen gemäß Anspruch 1 auf die Pilze und/oder deren Lebensraum einwirken läßt.

3. Verwendung von Wirkstoffkombinationen gemäß Anspruch 1 zur Bekämpfung von Pilzen.

4. Verfahren zur Herstellung von fungiziden Mitteln dadurch gekennzeichnet, daß man Wirkstoffkombinationen gemäß Anspruch 1 mit Streckmitteln und/oder oberflächenaktiven Stoffen vermischt.

**Claims**

1. Fungicidal agents, characterised in that they contain an active compound combination comprising
   a) 3,3-dimethyl-2-(4-methoximinomethyl-phenoxymethyl)-1-(1,2,4-triazol-1-yl)-butan-2-ol of the formula

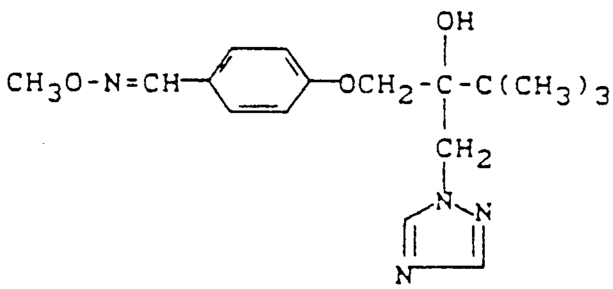

(I)

and
   b) N,N-dimethyl-N'-(fluorodichloromethylmercapto)-N'-(4-methyl-phenyl)-sulphamide of the formula

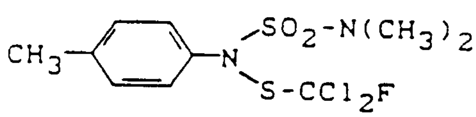

(II),

where, in the active compound combination, the ratio by weight of active compound of the formula (I) to active compound of the formula (II) is between 1:1 and 1:10.

2. Method of combating fungi, characterised in that active compound combinations according to Claim 1 are allowed to act on the fungi and/or on their environment.

3. Use of active compound combinations according to Claim 1 for combating fungi.

4. Process for the preparation of fungicidal agents, characterised in that active compound combinations according to Claim 1 are mixed with extenders and/or surface-active substances.

**Revendications**

1. Agent fongicide, caractérisé en ce qu'il contient une combinaison de substances actives composée de
   a) 3,3-diméthyl-2-(4-méthoxyiminométhyl-phénoxyméthyl)-1-(1,2,4-triazol-1-yl)-butane-2-ol de formu-

le

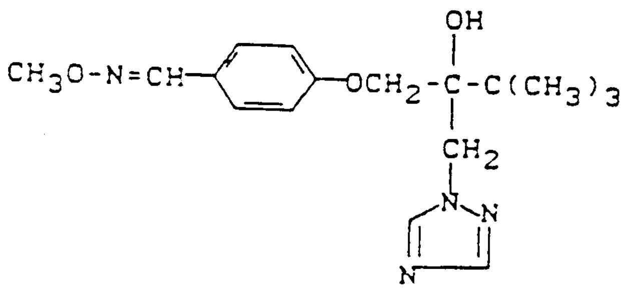

(I)

et

b) N,N-diméthyl-N'-(fluorodichlorométhylmercapto)-N'-(4-méthyl-phényl)-sulfamide de formule

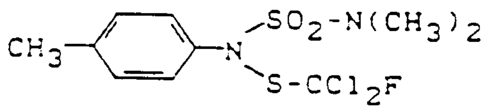

(II),

le rapport en poids entre les substances actives de formules (I) et (II) dans la combinaison étant de 1:1 à 1:10.

**2.** Procédé pour la lutte contre les champignons, caractérisé en ce que l'on fait agir les combinaisons de substances actives selon la revendication 1 sur les champignons et/ou sur leur habitat.

**3.** Utilisation de combinaisons de substances actives selon la revendication 1 pour la lutte contre les champignons.

**4.** Procédé pour la fabrication d'agents fongicides, caractérisé en ce qu'on mélange des combinaisons de substances actives selon la revendication 1 avec des agents d'allongement et/ou des agents tensio-actifs.